Europäisches Patentamt

European Patent Office

Office européen des brevets

(19)

(11) Publication number: **0 009 211**
**B1**

## (12) EUROPEAN PATENT SPECIFICATION

(45) Date of publication of patent specification: **23.07.86**

(21) Application number: **79103427.5**

(22) Date of filing: **13.09.79**

(51) Int. Cl.⁴: **G 02 B 6/38**

(54) Optical fiber alignment mechanism and connectors using the same.

(30) Priority: **20.09.78 JP 116220/78**
**22.01.79 JP 4728/79**
**22.01.79 JP 4729/79**
**16.04.79 JP 46440/79**
**23.04.79 JP 48930/79**

(43) Date of publication of application:
**02.04.80 Bulletin 80/07**

(45) Publication of the grant of the patent:
**23.07.86 Bulletin 86/30**

(84) Designated Contracting States:
**DE FR GB**

(56) References cited:
**DE-A-2 757 215**
**FR-A-2 344 853**
**GB-A-1 472 636**
**US-A-4 087 155**
**US-A-4 099 832**
**US-A-4 109 994**

NACHRICHTENTECHNISCHE ZEITSCHRIFT
N.T.Z., Vol. 31, No. 2, 1978 Berlin P. HENSEL
"The Triple Ball Connector for Optical Fibres"
pages 133 to 134

(73) Proprietor: **Nippon Telegraph and Telephone Corporation**
**1-6 Uchisaiwaicho 1-chome Chiyoda-ku Tokyo (JP)**

(72) Inventor: **Murata, Hisashi**
**231-2-113 Miwa 2-chome**
**Mito City Ibaraki Prefecture (JP)**

(74) Representative: **Patentanwälte Wenzel & Kalkoff**
**Grubes Allee 26 Postfach 730466**
**D-2000 Hamburg 73 (DE)**

(56) References cited:
NACHRICHTENTECHNIK ELEKTRONIK, No. 8,
1979, Berlin, M. KAISER "Optische Stecker"
pages 90 to 96

Courier Press, Leamington Spa, England.

## Description

The present invention relates to an optical fibre alignment mechanism and connectors using it.

Optical fibres have been widely known as suitable means for transmitting optical signals in optical communications. In optical fiber communication systems, however, the loss of optical energy has always been a subject of discussion. When light is transmitted through optical fibres, there is caused not only transmission loss due to fibre characteristics but also connecting loss due to the fibre interconnections. This invention aims at elimination of the latter loss. In order to eliminate or minimize such connecting loss, fibre alignment has to be achieved with accuracy of micrometer order, and at the same time, one fibre end has to closely abut on the other opposite thereto. Further, optical fibres are usually thin lines having a diameter of 100 micrometers order, so that the fibres themselves are fragile and their ends can be even more fragile. Accordingly, fibre ends have to be provided with the structure that is suitable for protecting and reinforcing them. In order to attain a fine fibre alignment mechanism there have been made a lot of trials. However, they have not always been successful in giving an entire solution of the problem.

A triple-ball connector for optical fibres is known from N.T.Z., Vol. 31, No. 2, 1978; Paul Hensel "The Triple Ball Connector for Optical Fibres", pp. 133—134, and "Nachrichtentechnik Elektronik" No. 8, 1979; M. Kaiser; "Optische Stecker", p. 94, chapter 4.3. For the optical fibre alignment, the prior art connector utilizes a tricuspid interstice formed by three spheres with equal diameter. The end of the fibre is mounted in that interstice. The spheres are further mounted in an elongated cylinder member. This arrangement will result in good fibre mating with high accuracy, because the tricuspid interstice formed by three spheres is smartly utilized to mount the fibre therein. Three spheres are contained in the cylinder member and then, two of said cylinder members are inserted into a single sleeve for coupling. In such a structure, however, the fibre alignment would become impossible if either of the two cylinder members should be deformed by some cause. In other words, when an off-center state occurs between the inner and outer diameters of said cylinder member, the center of the fibre inserted into the sleeve comes to be off-axis against the sleeve centre, thus also causing another off-axis state in respect of the fibre coming from the opposite side of said cylinder member. In order to solve such an off-centre problem, it is necessary to form said cylinder member with extremely high accuracy, thus resulting in expensive connectors.

According to another known structure a plug is formed by molding ("Nachrichtentechnik Elektronik", No. 8, 1979, Berlin; M. Kaiser "Optische Stecker" p. 95, chapter 4.5). The fibre is inserted in a casting mold, and the plug body is formed by filling up the casting with a stiffening mass, e.g., an epoxy resin. However, it is a well known fact that the molding plastic when stiffening tends to shrink. Due to this shrinkage any fine adjustment of the fibre alignment before molding the plastic will be in vain. Apart from this, possible tolerances or variations by the casting become effective. Accordingly, it is hardly possible to achieve an accurate fibre alignment by such a simple molding method.

The following plugs or connectors of the prior art use rods for aligning an optical fibre by a three-elements set of cylindrical rods, each rod of the three-elements set having two generatrices in contact with its two adjacent rods, while one generatrix is in contact with the introduced optical fibre.

According to FR—A1—2 344 853 a connecting plug for an optical cable comprises a bushing and a bunch of cylindrical rods arranged inside the bushing, the bunch including at least one three-elements set of cylindrical rods. A bonding material is introduced into the bushing for securing the bushing to the rods and the optical fibre. The disadvantage consists especially in assembling one bushing for each plug body. This bushing has to meet very accurate and special conditions of manufacture. Thus, the cylindrical bushing is defined by the outer lateral wall and the inner lateral wall coaxial therewith. The diameter of the inner wall is a function of a diameter of the rods. The external wall of the bushing serves as a reference for the fibre axis position for establishing the connection. The bushing requires an accurate internal wall and a precision machineable material. The fibre alignment would be impossible if the bushing were deformed by some cause. At all events, the alignment and the connection are dependent on the quality of the outer surface of the bushing and its material.

According to US—A—4 109 994 a pair of optical fibre terminations abut in a V-groove. Each termination comprises a set of more than three cylinders closely packed side by side to provide a plurality of interstitial apertures therebetween into which single fibres are individually inserted. The whole assembly is secured, e.g., by potting which, however, is not shown or described. At all events, the potting is to be performed after the whole assembly is clamped tight. Consequently, the potting comprises a troublesome method of working which is aimed only to secure the cylinders and the fibre. By this form of construction the fibres can be inserted while the cylinders are still loose, thus allowing the interstitial spaces to be enlarged at will by displacement of the cylinders. The clamping makes it impossible or at least very difficult to achieve a well-defined contour or circumference of the termination repeatedly.

Furthermore, there are known connectors with three inner rods and at least three outer rods, the outer rods being covered with a resilient sleeve into which connector means are to be axially inserted (US—A—4 123 139, US—A—4 099 832). The inner rods extend parallelly and in mutual contact with one another, thereby forming a tricuspid aperture therebetween. An optical fibre is disposed within the aperture and secured to the inner rods. The mutual contact of the three inner rods with one another can be achieved by inserting an adhesive, such as silicon rubber, into the spaces of the aperture not occupied by the fibre. To achieve the strictly parallel alignment of the three inner rods to each other and their mutual contact it is known to use a jig (US—A—4 099 832). Within the jig the fibres are forced into place. The entire assembly is baked to cure an inserted epoxy. To prevent an abrupt bend or kink where the fibre enters the inner rods, the epoxy bonding the inner rods is used to form an anchor towards the back of the half-connector. Then several layers of heat-shrinkable tubing are applied, as required, to form a handle and to provide strain relief. This method of epoxying the fiber firmly to the inner rods results in a troublesome manufacturing of the half-connector. Furthermore, there is finally a protective coating of silicone rubber compound placed over the ends of both the fibre and the inner rods. In such structure it is impossible to safeguard a stable and durable connection and sufficient resistance against repeated mating and detaching of the connector due to the fact that the tangential contact between the inner rods in the interstice may be broken by external force added thereto, whereas by application of twisting force, the fibre location in the inner rods may be changed. At all events, the connector has to comprise outer rods in order to receive and to guide the inner rods, the outer rods being elastically mounted. Thus, the construction is voluminous and susceptible to unintentional deformation. The nesting of the inner rods within the outer rods results in an expensive optical fibre connector.

The object of the present invention is to provide an optical fibre alignment mechanism including a plug, the front portion of which forms a plug body having an outer surface defining contact areas for engagement with sleeve or socket means receiving the plug body, an optical fibre arrangement including at least one optical fibre, and fibre alignment means comprising an arrangement of at least three rigid members of circular cross-section at least one of which is a rigid ball, which rigid members are disposed in said plug body to surround the optical fibres and each of which is in tangential contact with at least one of the optical fibres as well as with two other of said rigid members, for allowing the precise connection of optical fibres for use in optical communication systems; and a connector utilizing two fibre connecting plugs, each utilizing such alignment mechanism, by which accurate optical fibre alignment and connection are attained with minimized optical connecting energy loss, the method of manufacturing becomes simple and economical, the number of elements is decreased and the connection becomes stable and durable against wear even in the case of frequent repetition of mating and detaching the connector.

According to the present invention this problem is solved by a plug which is a moulded plug of a pourable and stiffening plastic resin forming a plastic member defining the general contour of the plug including the plug body, the outer surface of which plastic member substantially encloses, in lump the fibre arrangement and the rigid members but nevertheless allows a plurality of the rigid members to be exposed to a limited extent at least at three portions on the plug body, at least part of these limited exposed portions defining said contact areas of the plug body.

The moulded plug provides a one-piece connector element without using a bushing, a tube, a plug sleeve or anything similar. Each of the at least three rigid members makes a tangential contact against the outer surface of the plug. These tangential contact points or lines become slightly exposed when the resin poured into a mould or casting shrinks during its stiffening, the effective diameter, resp. the effective outer guide surface of the plug thus being free due to resin shrinkage. Therefore, the plug can stand frequent repetition of mating with and detaching from the connector without inviting decrease of alignment accuracy and without spoiling stable connection. Although the general shape of the plug body is defined by the plastic member moulded to contain fibre and rigid members in lump, the outer surface of the plastic member is in tangential contact with the rigid members so that the effective outer surface of the plug has a very stable diameter formed by the tangential contact points or lines between the rigid members and the circumscribed surface. Therefore, the fibre axis and the effective plug centre axis can be coincided with each other regardless of plastic resin shrinkage due to the manufacturing process. It is very easy to mold the plug in a mould cavity. Firstly, rigid members are placed in the cavity of the mould, and then the fibre is inserted. Thereafter a melting plastic resin is poured into the portions of the mould. When the resin poured is completely stiffened, the moulded plug is removed out of the mould. The use of at least one rigid ball as a rigid member ensures that the spaces for the plastic member to be poured become very distinct. Thus, the moulding process becomes much easier. Furthermore, the fibre is in point contact with the ball so that the friction therebetween can be prevented from receiving unreasonable force. A ball can be thrown into the casting or mould so that the manufacturing process is further improved. A rigid ball for use in the moulded plug is manufactured with a high accuracy of 0.5—0.2 μm. Such rigid balls are obtainable at low cost in spite of such a high accuracy. Due to the moulded plug means constituted by the plastic member which contains in lump at least one fibre and rigid members the receiving of the two plug means may be achieved in a very suitable manner when using a receptacle of the afore described structure.

The manufacture of the moulded plug by way of a pouring a melting plastic resin into the mould will ensure that the inserted fibre is kept correctly vertical within the interstice against the cavity bottom. When the plastic resin stiffens, the rigid members and fibre are bonded together in lump. Thereby, an exact end position of the fibre in the end face of the plug body may be defined, i.e., the fibres are accurately extended to reach the bottom of the mould. If a finishing of the end of the fibre resp. of the end face of the plug body is required, the accurate location of the fibre at the bottom portion of the plug, i.e., at its end face, will guarantee a perfect and excellent buffing or polishing.

An advantageous embodiment of the mechanism consists in that all of the rigid members are rigid balls. Using only balls as rigid members results in the advantage that rigid balls of high accuracy are readily and economically obtainable to reduce total cost of the device. Furthermore, the use of rigid balls ensures that the spaces for the plastic member to be intruded are formed in an absolute distinct manner, allowing the molten plastic resin to extend easily into the interstices between balls. Consequently, the moulding process is very easy and the rigid members are firmly secured.

A very favorable arrangement using balls is achieved in that the rigid balls surrounding the optical fibre are divided into a plurality of known per se triangular triple-ball sets which are stacked in parallel with a plane perpendicular to the axis of the fibre in such a manner that one triple-ball set takes a position twisted by 60° against two other sets on both its sides, and that the balls are exposed tangentially on the circumscribed surface of the plug body. If the plastic resin should shrink during its stiffening resp. curing, the force caused by shrinkage would be blocked by the triple-ball sets. Therefore, less force would reach the fibre. It is also possible to use only one single triple-ball set which ensures that the fibre is firmly held at the end of the plug by hardened resin.

According to a further embodiment it may be very appropriate that the plastic member contains in lump at least two known per se triangular triple-ball sets, a part of each ball being exposed tangentially on the circumscribed surface of the plug body, the fibre running through the interstice formed at the inside of the triple-ball sets, and a ring spacer being axially arranged to intervene between two of the triple-ball sets. With this structure, the fibre is made parallel with the outer surface of the plug. The fibre is accurately located at the top and bottom portion of the plug, thus a lengthy plug being obtainable without spoiling the accurate fibre location.

The structure by balls could be provided with less strength in its axial direction and its dimension could possibly, e.g., in the case of a lengthy plug—not be kept unchanged for a long time. Thus, is may be very effective that the rigid members are a combination of rigid balls and rigid rods. Consequently, the above-mentioned advantages by rigid balls are used in spite of the additional providing of rods. The advantage of combined balls and rods is that the number of parts of the plug can be decreased in comparison with an arrangement of rigid balls only without spoiling precise fibre location. The mechanical strength of the plug is improved to a great extent, whereby the connector is more miniaturized than the prior art structure. Such an arrangement using the combination may be realized in that the rigid members consist of two rigid rods being in tangential contact with each other and of adjoining rigid balls which are lined to be in tangential contact with both of the rigid rods, the rigid rods and rigid balls being exposed on the circumscribed surface of the plug body, or in that the rigid members consist of a rigid rod and two rigid ball lines or balls being in tangential contact with each other as well as with the rigid rod, the balls and the rod being exposed out of the outer surface of the plug body. The respective selection is dependent on the strength and/or dimension of the plug to be obtained.

To achieve a multi-fiber arrangement the plastic member may contain in lump a plurality of optical fibres and a plurality of rigid members surrounding each of the fibres, the rigid members being arranged in a plurality of axially extending layers and in tangential contact with neighbour members, each of the fibres running through the interstice formed by adjoining three rigid members and being in tangential contact therewith, and each rigid member belonging to the peripheral side layers of the rigid members being in tangential contact with the outer surface of the plug body. The number of layers may be two and all of the rigid members may be in tangential contact with the outer surface of the plug body resp. the plastic member or—according to another embodiment—the number of layers may be three and only a part of the rigid members may be in tangential contact with the outer surface of the plug body resp. the plastic member. To achieve another multi-fibre arrangement the plastic member may contain in lump a plurality of optical fibres and a plurality of rigid members surrounding each of the fibres, the rigid members being arranged such that one of the rigid members is positioned at centre and the remaining members are annularly positioned around the centre rigid member, the centre rigid member being in tangential contact with all of the surrounding rigid members, each of which is also in tangential contact with rigid members on both its sides, each of the fibres being surrounded by the centre rigid member and adjoining two of the annularly arranged rigid members, and each of the annularly arranged rigid members being in tangential contact with the outer surface of the plug body. With respect to these arrangements, it is very advantageous to use a combination of balls and rods. Thus, it becomes more easy to insert fibres into the interstices and the multi-fibre arrangement is radially obtained with high mechanical strength.

The plug body resp. the plastic member may have a circular, a triangular or a rectangular cross section. According to one embodiment, each rigid member is in tangential contact with two sides of an equilateral triangle, so that it will be exposed at two points or lines on its periphery when the resin shrinks during the manufacturing process. The number of points or lines is increased twice compared with the plug having a circular surface. Thus the fibre location against the connector becomes more accurate. When the effective plug dimension is determined by a rectangular cross section there is no need to provide further means which restrict the plug's angular position against a connector. Apart from this, said number of points or lines may also be increased by a rectangular plug compared with a circular plug.

With special respect to a cross sectional pattern of a fibre group the plug insertion to a connector has to receive limitation with respect to its angular position about its axis. This may be obtained in that the plastic member is provided at least at its end portion with a key way prepared in the form of a groove to restrict the revolution about the mechanism's axis, the shape of the key way being defined by exposed rigid members, wherein the plastic portion across two rods or balls may be removed to form the key way.

Due to the manufacturing process of the moulded plug, i.e., due to the shrinkage of the plastic resin, there is especially the facility that a part of the rigid members may be exposed at the end face of the plug body including the fibre end. Thus, if buffing or polishing is necessary the final treatment of the end face is very easy, since it is the exposed part of the rigid members that is polished. The polishing speed in finishing the end face can be very fast by using an exposed part of a rigid ball thereby having a further advantage of rigid balls as rigid members, because the shape of the ball is very suitable for polishing until it is reduced to about half its size.

Furthermore, it may be very favourable that the rigid members are in tangential contact with the frontal end face of the plug body resp. of the plastic member, and are tangentially exposed on it, and the material of the rigid members is harder than at least the material of the optical fiber so that after a polishing process the optical fibre end is located at the inside a little offset from the rigid member surface exposed at the end face. Therefore, as a result of the polishing process, the end of the fibre is more deeply polished than the ends of the rigid members by a few microns. Consequently, the end of the plug body is led by the hardest member, i.e., the rigid members, so that the fragile fibre faces come to oppose each other at a distance of several microns when the two plugs are mated with each other, thus preventing fibre faces from being broken.

The construction of the moulded plug is also suitable in that the optical fibre consists of a group of optical fibres, of which the external surface is in tangential contact with the rigid members.

In moulding the plug, it is desirable to use plastic material of a type which has a low viscosity in fluid form, so that the plastic member may be made of epoxy resin.

According to the plug construction, it is very advantageous that the end face or sphere surface of the rigid members being exposed out of the end surface of the plug body has a higher hardness than other plastic member portions. Thus, the rigid members can be made of a material that is selected from steel, glass, industrial ruby or sapphire. This improves the plug body in that it is provided with an excellent outer active surface which is so hard and so resistant to wear that it stands against frequent repetition of the mating with and detaching from a connector. Furthermore, such materials guarantee the accurate positioning of the optical fibre.

According to a further essential aspect of the invention it is very easy and practical to adjust the plug means by using a simple connector comprising two optical fibre alignment mechanisms according to the invention, which connector is characterized by a receptacle which comprises a resilient sleeve for receiving the two mechanisms from both its ends by a housing for containing the sleeve, and by means for determining the position of the sleeve in the housing.

The sleeve can be provided with a slit formed in its axial direction. Owing to the existence of the slit as well as to the elasticity of the material, the sleeve is able to grasp the plug means inserted thereinto firmly. However, it is also possible to use such a sleeve that is made only of a resilient material without a slit.

Advantageously, the moulded plug of the optical fibre alignment mechanisms may comprise a base and a guide cylinder which extend rearwardly from the plug body of the moulded plug, the optical fibre alignment mechanisms further comprising a spring for biasing the moulded plug in the connecting direction, and a housing. The guide cylinder is adapted to receive the tip of an inserted jacket of the fibre reaching the base of the moulded plug. The whole shape of the moulded plug formed in lump ensures a very favourable construction of the connector having a spring for biasing the moulded plug in the direction towards the connector, and having a housing, the spring and the housing being in combined action with the guide cylinder and the base.

The plug main body may be provided with a key way for limiting its axial revolution while the sleeve may be provided on its inner wall with a guide pin to mate with the key way. Due to the key way formed in the surface of the plug main body, it is very easy to provide the connector sleeve on its inner wall with a respective tight pin to mate with the key way. When the plug body is inserted into the sleeve, the circle of the sleeve cross section is extended by the force of the pushing guide pins in the up and down direction. As a result, the sleeve comes to have an elliptic cross section, of which the vertical axis is a little longer than the horizontal. When the sleeve is deformed, a restoration force is created between the guide pins, which force firmly grasps the inserted plugs. The deformation of the connector sleeve does not affect the accurate aligning of the two mechanisms. A connector using such key ways only has a small number of elements and therefore a very small dimensioned construction.

Furthermore, it is possible that there be provided a spacer intervening between the plug main body except for the guide pin portion and the inner wall of the sleeve. For example, according to an embodiment of the invention, there are provided a first guide pin mated with a slit of the sleeve and the key way of the plug body and a second guide pin, the position of which is defined by two spacers on the opposite side and which mates with a second key way of the plug body.

At all events, the main advantages of the invention consist of using a plastic member for fixing a rigid member arrangement together, so that dimensional requirement for the plastic member is not dominant for aligning. The forming of the plastic member is promoted by using at least one rigid ball as rigid member. Consequently, the use of balls ensures a very favourable manufacture of the plug and improves the blocking of force within the plug. Generally, the plastic material shrinks when it hardens. Consequently, the outer surface of the plastic allows the rigid members to become partially exposed. Thus, the effective outer diameter of the plug operating with respect to accurate aligning comes to be determined by the arrangement of precision rigid members. A combination of balls and rods is used to improve the strength of the resultant structure and also to make the plastic resin adequately go throughout the structure in spite of using also at least one rigid rod. The moulded plug construction allows the integration of key ways to restrict the angular position of the plug about its axis. The whole construction of the connector is very simple because the plug means may be formed by a low number of constructive elements for the connector and by reducing the accuracy of, for instance, the sleeve of the connector so that the connector is simply constructed and at low cost.

Further objects, features and advantages of the present invention will be more fully understood from the description taken in conjunction with accompanying drawings, wherein:

Fig. 1 is a perspective fragmentary sectional view of an optical fibre alignment mechanism and the connector utilizing it according to the present invention;

Fig. 2A is a perspective view of a plug body as shown in Fig. 1;

Figs. 2B and 2C are cross sectional views taken along IIB—IIB and IIC—IIC lines respectively;

Figs. 3A, 3B, 3C and 3D are diagrams for showing the process of moulding the plug body in Fig. 2A;

Fig. 4 is a diagram showing a modified embodiment of this invention wherein a set of rigid ball members are used;

Fig. 5 is a cross sectional view of a further modified plug body of the invention;

Fig. 6 is a sectional view of the modified plug according to the invention including an intermediate spacer;

Fig. 7 is a sectional view of a modified plug according to the present invention, in which a plurality of optical fibres are held at a centre tricupsid interstice;

Fig. 8A is a perspective view of a modified plug according to the invention, which is provided with means for limiting its angular position against the connector;

Fig. 8B is a cross sectional view of the plug as shown in Fig. 8A, when taken along a plane in parallel with the plane including the centres of the three spheres;

Figs. 9A and 9B are two kinds of cross sectional views of a parallelepiped modified plug according to the invention, which contains a plurality of rigid ball members and optical fibres;

Fig. 10 is a perspective view of another plug end structure in which rigid ball and rod members are used together;

Figs. 11A and 11B are diagrammatical representations for use in explaining the process of manufacturing the plug as shown in Fig. 10;

Figs. 12 and 13 are cross sectional view of plugs which are modifications of the plug as shown in Fig. 10;

Figs. 14, 15, and 16 are diagrammatical representations for showing further modifications of plugs as shown in Fig. 10 through Fig. 13;

Figs. 17, 18, 18A and 19 are diagrammatical representations of plugs having a key way;

Fig. 20 is a perspective view of a connector sleeve to be coupled with plugs as shown in Figs. 18 and 19;

Fig. 21 is a perspective fragmentary sectional view of two plugs with a key way as shown in Fig. 19 being coupled with the connector sleeve as shown in Fig. 20;

Fig. 22 is a cross sectional representation for showing the coupling state in Fig. 21;

Fig. 23 is a cross sectional representation for showing the coupling state of a plug and a connector modified from Fig. 22;

Fig. 24 is another modification of the plug having two key ways;

Fig. 25 is a cross sectional representation for showing the coupling state of a further modified connector and plug having two key ways;

Fig. 26 is a longitudinal cross sectional view of a modified optical fibre end structure which is applicable to each embodiment as mentioned above.

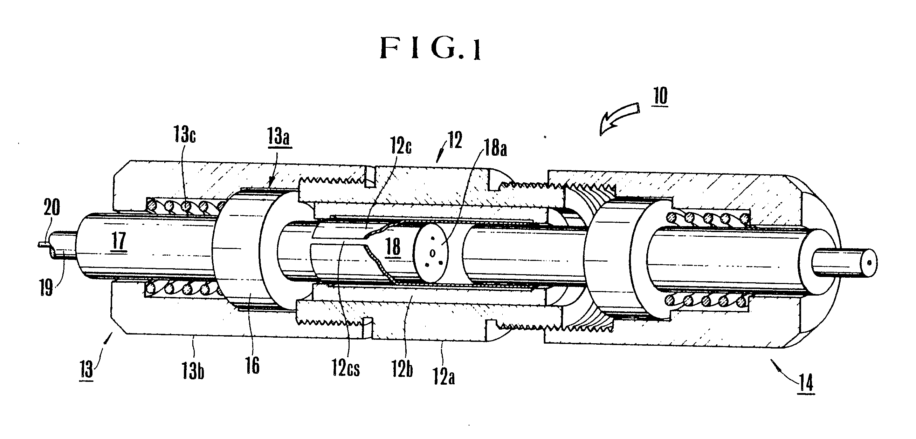

Fig. 1 is a perspective fragmentary sectional view of the optical fibre alignment mechanism according to the invention and the connector utilizing it, especially the connector and plug combination for a single optical fibre. In the figure, a connector 10 comprises a main connector body 12 and plug means 13 and 14 which are inserted into said connector body 12 from opposite ends thereof. The connector body 12 consists of a cylindrical housing 12a, spacer or sleeve holder 12b contained in said housing 12a, and a slitted sleeve 12c which is held within said sleeve holder 12b. Both ends of said housing 12a are provided on their side surface with a thread portion for coupling to the plug means 13 and 14. Said sleeve 12c is formed of a resilient material showing spring action such as phosphor bronze, and is provided with a slit 12 cs which is formed in its axial direction. Owing to the existence of said slit 12 cs as well as the elasticity of the material, the sleeve 12c is able to grasp the plug means 13 and 14 inserted thereinto firmly.

The plug means 13 and 14 have an entirely identical structure, so that the following description will be made only about the plug means 13.

The plug means 13 comprises a moulded plug 13a, a housing 13b containing said plug 13a, and a spring 13c which is housed in said housing 13b and provides a biasing force to said plug 13a so as to push it always toward the centre of the connector 10. The moulded plug 13a comprises a base 16 located about its centre, a guide cylinder 17 which extends in one direction from one side of said base 16 to project out of said housing 13b, and a cylindrical plug body (hereinafter merely called plug) 18 which extends in the opposite direction from the other side of said base 16 and is to be inserted into sleeve 12c. Said base 16, guide cylinder 17, and plug 18 are moulded in lump to form the entirety of said molded plug 13a. A jacket 19 is inserted into said guide cylinder from its one end to cover an optical fibre 20. The tip of the inserted jacket reaches said base 16. The optical fibre 20 is further extended up to the end face of said plug 18. In this case, the optical fibre 20 is aligned on the axis of the moulded plug 13a by an arrangement as explained later, where rigid precision members are adjoiningly disposed to surround the fibre 20, thus the end of the fibre always comes to appear at the centre of a circular plug end 18a.

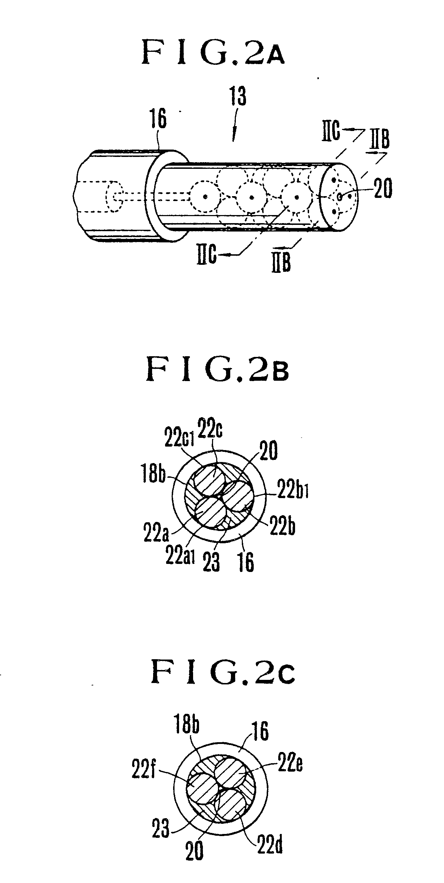

Figs. 2A, 2B and 2C are diagrammatical representation to show the structure of the plug 18 in greater detail. As shown in these figures, said plug 18 contains a first set of three rigid precision balls 22a, 22b and 22c with an identical diameter, which are disposed around the fibre 20 to be in tangential contact with it. The rigid balls are made of a hard material such as steel, high quality hard glass, industrial ruby or sapphire. With optical fibres having a diameter of 0.15 mm, there are used rigid balls having a diameter of about 1 mm. Rigid balls having such diameter are readily and economically obtainable with high accuracy by means of the current technology. Said three balls 22a, 22b and 22c are adjoiningly moulded in the plug 18 to be exposed respectively at points where each ball is in contact with the circumscribed surface 18b as well as the end 18a of said plug 18. Such points are indicated by reference numerals 22al, 22bl and 22cl in Fig. 2B as well as by three small circles on the end face of the plug 18 in Fig. 2A. The plug end 18a is finished by polishing to obtain a fine flat surface which is suitable for closely abutting on the counter plug end. In molding the plug 18, it is desirable to use plastic material of the type which has a low viscosity in fluid form, such as epoxy resin. The plug 18 further contains another triple-ball set consisting of balls 22d, 22e and 22f, which are stacked along the axis of the plug 18 toward said base 16. These balls are also surrounding and in tangential contact with the optical fibre 20 as said triple-ball set 22a, 22b and 22c. The adjacent triple-ball sets are displaced with respect to each other by 60° about the axis of the plug 18 and make multi-tangential contacts therebetween. This relationship will become more clear when referring to Figs. 2B and 2C. Balls 22d, 22e and 22f are kept in tangential contact with the side surface 18b of the plug 18 as said balls 22a, 22b and 22c. Still another triple-ball set is disposed next to said triple-ball set 22d, 22e and 22f with the same relationship that is kept between said two triple-ball sets, one consisting of balls 22a, 22b and 22c, and the other including balls 22d, 22e and 22f. By repeating the steps as described above, triple-ball sets are disposed in the plug as shown in Fig. 2A, where six triple-ball sets are seen.

In the triple ball arrangement as explained above, the optical fibre 20 runs through the central tricuspid interstice of each triple-ball set. This means that the fibre 20 is located at the centre of an equilateral triangle, of which the vertices correspond to the centres of the three balls forming the triple-ball set. The fibre location, therefore, is kept stably against shrinkage of the plastic resin 23 which occurs when it stiffens in the mould. When the plug 18 is inserted into the connector (Fig. 1), its surface 18b is firmly grasped in said sleeve 12c. The shrinkage of the resin 23 cannot influence the triple-ball set geometry but exposes at a single point the tiny sphere surface of each ball. Thus, the substantial and active surface 18b is accurately determined by the rigid precision balls. This results, accordingly, in the accurate coincidence between the fibre and sleeve axes when the plug is grasped by the sleeve 12c.

Further, according to the plug construction as mentioned above, the sphere surface of the rigid ball exposed out of the surface 18b has a greater hardness than other plastic member portions. This means that the plug 18 is provided with an excellent outer surface which is so hard and so resistant to wear that it withstands repetition of the mating with and detaching from the connector.

Still further, it is apparent that the present plug construction as mentioned above is effective not only for location of the fibre 20 in the plug 18 but also for the protection and reinforcement of the optical fibre, especially its end.

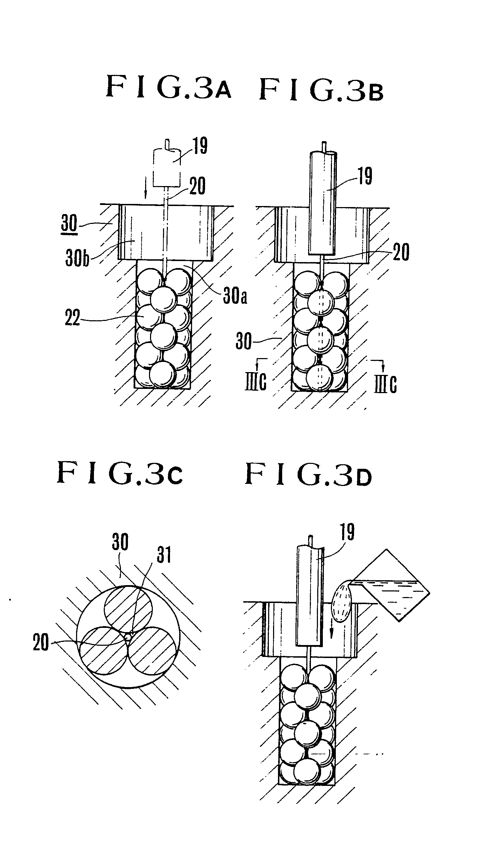

The plug structure as mentioned above will be attained by the manufacturing steps as shown in Figs. 3A, 3B, 3C and 3D. In these figures, the guide cylinder 17 in Fig. 1 is omitted for simplifying the explanation. Also for further simplification of the explanation, the manufacturing steps will be described in terms of the single-fiber plug structure.

First, there is prepared a mould 30 which has a form corresponding accurately to the outer dimension of a plug to be made. The mould 30 comprises two portions. One is a deeper cylinder portion 30a which defines the outer surface of the plug, and the other is a cylinder portion 30b which is shallower than said cylinder 30a but has a larger diameter than said cylinder 30a. The cylinder 30a is processed to have an accurate inner diameter of 2.155 times the ball diameter arranged therein.

To obtain the precision balls, it is helpful to use the knowledge on commercial bearings. Rigid balls for use in bearings are manufactured with a high accuracy of 0.5—0.2 µm. Moreover, they are obtainable at low cost in spite of such a high accuracy. When at least eighteen rigid balls 22 having an identical diameter are cast into said deeper cylinder portion 30a, they are naturally accumulated in the fashion that three balls make one triple-ball set and each set is displaced about the mould axis by 60° in relation to the set immediately before it. Fig. 3 shows six triple-ball sets stacked in the cylinder 30a. In this state, each ball in the triple-ball sets comes to be in tangential contact with the inner wall of the cylinder portion 30a or to be very near it. Then, the bared optical fibre 20 extending from the plastic jacket 19 is inserted into the centre tricuspid interstice 31 of the top triple-ball set (Fig. 3C). Said interstice 31 has a form like a slightly deformed triangle. The state after fibre insertion is shown in Fig. 3B. Then, a melting plastic resin such as an expoxy resin is poured into the cylinder portions of the mould 30 as shown in Fig. 3D. When the resin poured is completely stiffened, the moulded plug is removed out of the mould 30, and then it will receive buffing or polishing, if necessary.

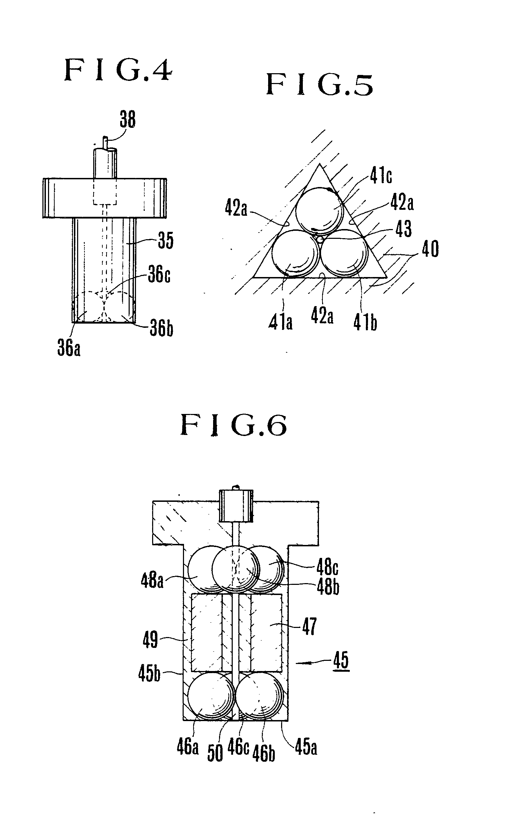

Fig. 4 shows a modified embodiment of the invention, wherein only a single triple-ball set of balls 36a, 36b and 36c is moulded in the plug 35. In this case, a fibre 38 may require auxiliary means (not shown) for keeping it accurately at the centre of the plug until the moulding is finished. After the resin has hardened, however, the fibre is firmly held at the end of the plug 35 by hardened resin 39. If the plastic resin should shrink during its stiffening, the force caused by shrinkage would be blocked by the rigid balls. Therefore, less force would reach the fibre.

Fig. 5 shows another modified embodiment of this invention. A mold 40 for the modified plug has the cross section of an equilateral triangle such that a triple-ball set of balls 41a, 41b and 41c is inscribed therein. Each ball is in tangential contact with two sides of said equilateral triangle, so that it will be exposed at two points on its spherical surface when the resin shrinks.

Reference numeral 43 designates an optical fibre which is in tangential contact with each of said balls in the interstice formed therebetween.

In the structure above, the number of points exposed due to resin shrinkage is doubled compared with the plug having the circumcircle surface. Thus, the fiber location against the connector becomes more accurate.

Fig. 6 shows another modified plug structure embodying the present invention. In the figure, plug 45 comprises rigid balls 46a, 46b and 46c having the same diameter and being in tangential contact with the plug end 45a as well as with the plug outer surface 45b; a cylindrical spacer 47, of which the bottom is in tangential contact with each of said three balls 46a, 46b and 46c while the upper face thereof is in tangential contact with each of another three balls 48a, 48b and 48c; an optical fiber 50 running through one interstice formed by the triple-ball set 48a, 48b and 48c, the hollow portion of said spacer 47 and the other interstice formed by the other triple-ball set 46a, 46b and 46c to arrive at the end face 45a; and a plastic member 49 which is molded to define the plug contour containing in lump said triple ball sets, spacer and the optical fibre. With this structure, the fibre is made parallel with the outer surface of the plug the same as shown in Fig. 2. Further, the fibre is located accurately at the top and bottom portion of the plug, a lengthy plug thus being obtainable without spoiling the accurate fibre location.

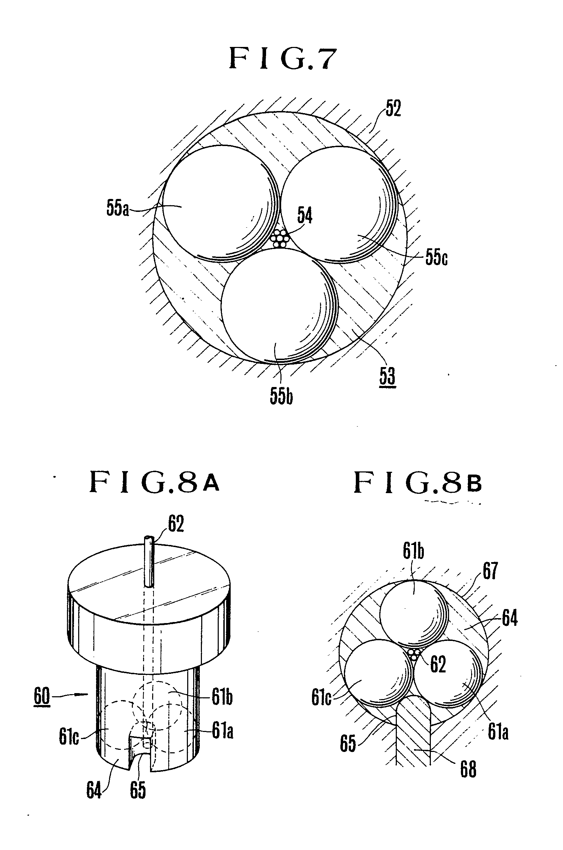

Fig. 7 shows another embodiment of this invention, in which a group of optical fibres is handled as a single optical fibre. Said group of the fibres is formed by binding a plurality of fibres closely so as to make its cross section axially symmetrical. In the figure, reference numeral 54 designates a group of fibres while 55a, 55b and 55c designate identical rigid balls selected in view of the diameter of said fibres 54. In this example, seven fibres are bound together. The bound fibres will have an almost complete symmetrical cross section because a unit fibre diameter is manufactured with a high accuracy. Therefore, when the group of fibres is inserted into the interstice formed by said three rigid balls, the centre of said group of fibres coincides accurately with the common centre of the triple-ball set. In this case, the outer surface of said group of fibres comes into tangential contact with said balls. When two plugs having the structure as mentioned above are inserted into the connector as shown in Fig. 1, each of said group of fibres in one plug must correctly meet each of the counter group of fibres in the other plug. Therefore, the plug insertion to the connector has to be limitated with respect to its angular position about its axis. The embodiment as shown in Figs. 8A and 8B is provided with a limiter which restricts the plug angular position in relation to the connector. In the figures, a reference numeral 60 designates a cylindrical plug, 61a, 61b and 61c identical rigid balls moulded in said plug body, and 62 an optical fibre group inserted into the interstice formed by said three balls. The upwardly extended portion of the fibres is usually covered by the jacket (not shown). A reference numeral 64 designates a moulded plastic member. Its outer side surface constitutes a circumscribed surface to said three balls and also its end face constitutes a tangential surface to them. A reference numeral 65 denotes a key way which is formed by partially emitting a side portion of said plastic member 64 including a part of its end portion. The structure as described above is attained by using a mould 67 as shown in Fig. 8B. The mold 67 has a core 68 inwardly projecting in the radial direction. Two balls 61c and 61a are kept in tangential contact with said projecting core. After the arrangement above, a melting plastic material is poured into the mould, thereby attaining the plug structure with a key way 65. With this structure, the key way 65 always comes to take a constant position with respect to the cross sectional pattern of the fibre group. The connector sleeve for receiving the above plug with the key way 65 is provided with a guide pin corresponding to said key way. Two plugs, therefore, are mated in the sleeve keeping their accurate and constant angular position to the sleeve, thereby sectional fibre patterns of both plugs precisely coincide.

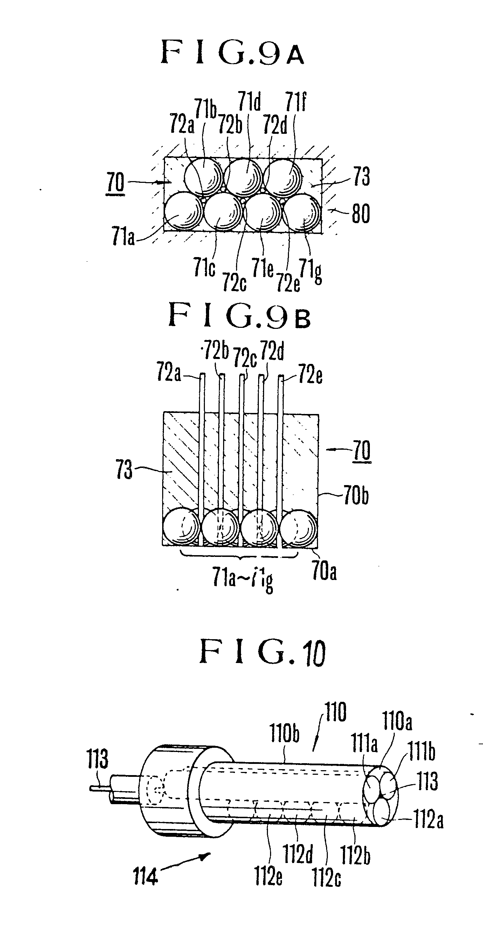

Figs. 9A and 9B show another multifibre plug according to the invention. In the figure, a reference numeral 73 designates a plastic member which is moulded by using a mould 80 to form a plug 70. The plastic member contains seven balls 71a through 71g and five optical fibres 72a through 72e, which are moulded in lump therein. In the mould 80, said balls are arranged to come into tangential contact with each neighbour, and also with the end face 70a as well as with the side face 70b of said plastic member 70. Each one of fibres 72a through 72e is inserted into a respective tricuspid interstice formed by three adjacent balls in tangential contact. In this example, rigid balls having an identical diameter are arranged in a single layer in parallel with said end face 70a. However, balls may be stacked to form a multilayer arrangement. In this case, after completion of arranging the first ball layer and fibres, preliminary resin pouring is performed to the extent that balls are immersed into the resin a little over half their height. When the resin stiffens, the balls and fibres are fixed precisely at aimed places. Then, necessary balls are added into the mould to form a multilayer ball arrangement by using the fibres fixed at their one end as guide rails for shooting additional balls. Further, instead of the multilayer ball arrangement, the plug structure utilizing the spacer, as shown in Fig. 6, may be adopted when multifibre location has to be attained over the long span of the plug.

In the embodiment as mentioned above, there is no need to provide the key way as shown in Fig. 8 because the effective plug dimension with a rectangular cross section is precisely determined by the overall dimensions of the precision ball assembly.

In the embodiments shown hereinbefore, only rigid balls are used as rigid members in each embodiment. The ball arrangement allows the melting plastic resin to extend into the interstices between balls. However, the structure with balls only has less strength in its axial direction and its dimension could not always be kept unchanged for a long time.

In the following paragraphs, there will be discussed embodiments wherein a combination of rigid precision rods and balls is utilized.

Fig. 10 shows an embodiment of this invention, in which a combination of rigid rods 111a and 111b, and rigid balls 112a through 112e is used. In this case, the end case 110a of the plug 110 includes the ends of the rods 111a and 111b and a diameter plane of a rigid ball 112a. These rods and balls are in tangential contact with one another, and the tricuspid interstice formed by them allows a fibre 113 to run therethrough. The fibre is also in tangential contact with rods and balls. The general shape of the plug body is defined by a plastic member 114 moulded to contain fibre, balls and rods in lump. The outer surface of said plastic member 114 is in tangential contact with said rods 111a, 111b, and balls 112a through 112e.

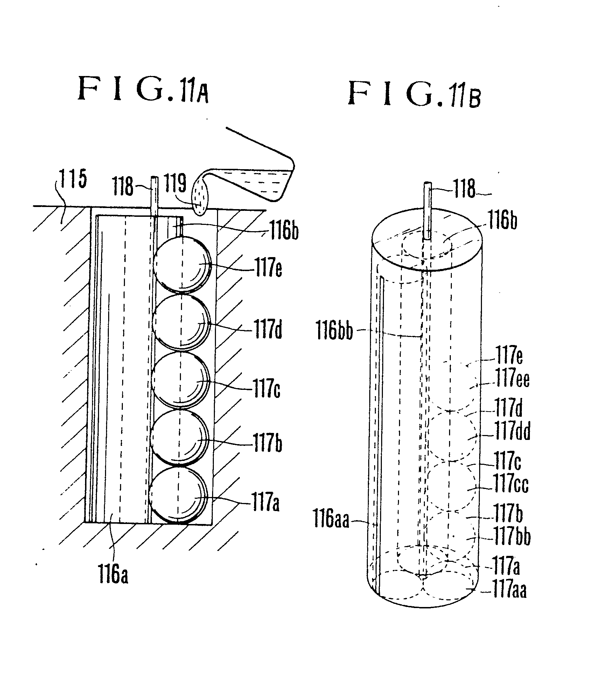

Figs. 11A and 11B show the procedure for manufacturing the embodiment as shown in Fig. 10. First, two rigid rods 116a, 116b and five rigid balls 117a through 117e are placed in a mould 115. Then, an optical fibre 118 is inserted into the interstices which are formed by said two rods and five balls. The fibre insertion is continued until the fibre tip reaches the bottom of the mould. After arrangement of the fibre, rods, and balls, a melting plastic resin such as epoxy resin is poured into the mould. When the plastic resin stiffens, the moulded plug is taken out of the mould and its end is finished until about half of the ball 117a has been removed. Fig. 11B shows the plug after it has received such an end finish work. Tangential contact lines or points between rods or balls and the plug outer surface are shown by reference numerals 116aa, 116bb, 117aa, 117bb, 117cc, 117dd and 117ee.

In the embodiment above, five balls are used but the number of the balls is not to be limited to this example. For example, a single ball can be effective. In this case, the optical fibre is initially proceeded along the valley formed by two rods and then inserted into the interstice formed by two rods and one ball.

Fig. 12 is a cross sectional view of a further modified plug according to the invention. In this embodiment, a plug 120 comprises a rigid rod 121, two rigid balls 122a and 122b, an optical fibre 123 which is inserted into the tricuspid interstice formed by said rod and balls and is in tangential contact with each of rod and balls, and a plastic member 124 moulded to determine the contour of the plug. A part of each ball and also a part of the rod are tangentially exposed on said outer surface of the plastic member 124.

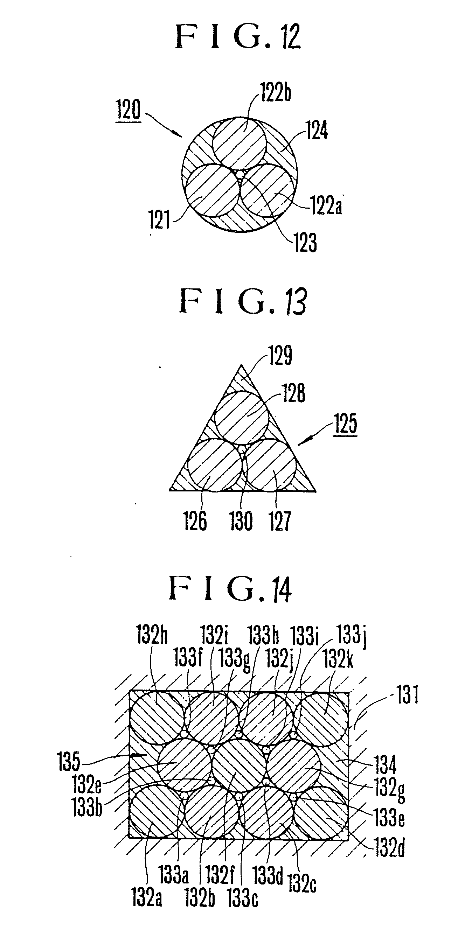

Fig. 13 shows another modified embodiment of this invention. The combination of rigid balls and rods is the same as that shown in Fig. 10 or Fig. 12, and only the cross section of the plug is changed to form a triangle. In the figure, a reference numeral 126 designates a rigid rod, 127 a rigid ball, 128 a rigid rod or ball, 129 a plastic member, and 130 an optical fibre.

Fig. 14 shows still another embodiment with a multifibre arrangement of this invention. For forming the structure of this embodiment, first, 11 rigid rods and balls (132a through 132k) are arranged in the rectangular space of a mould 131. Then, ten optical fibres 133a through 133j are located in 10 interstices formed by said rods and balls. Using only balls could make it hard to attain this arrangement. Accordingly, the multifibre arrangement as shown in Fig. 14 is readily obtained with mechanical strength when a rod and ball combination is utilized. The outer dimension of the resultant mould is determined accurately by the overall dimensions of the stacked precision rods and balls, so that two plugs can be aligned completely. A reference numeral 134 designates a plastic member which defines the contour of a plug 135. Rods and balls in tangential contact with the outer surface of said plastic member are tangentially exposed thereon. In this embodiment, the location of rods or balls is a matter of selection.

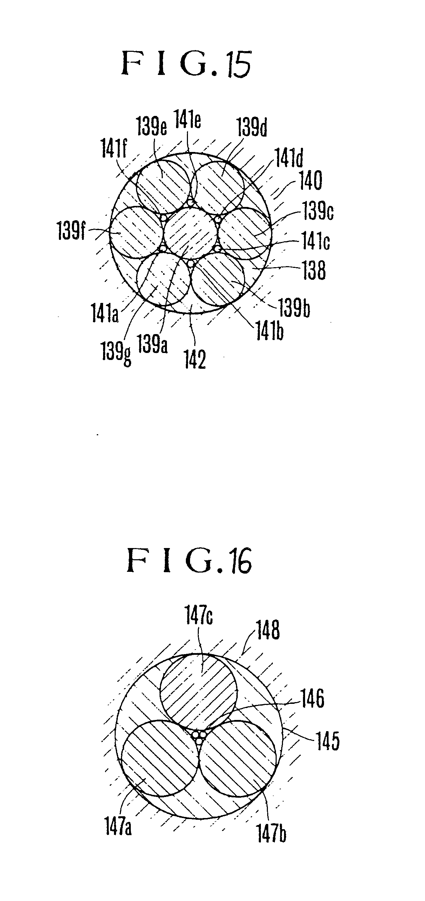

Fig. 15 shows another embodiment of the present invention. For achieving the structure of this embodiment, there are placed in a mould 140 rigid balls and rods 139a through 139g as well as optical fibres 141a through 141f. The rod and ball location is also a matter of selection just as in the embodiment of Fig. 14. A plastic member 142 determines the outer surface of a plug 138. Rods and/or balls are exposed tangentially on said outer surface of the plastic member the same as in the embodiments thus far.

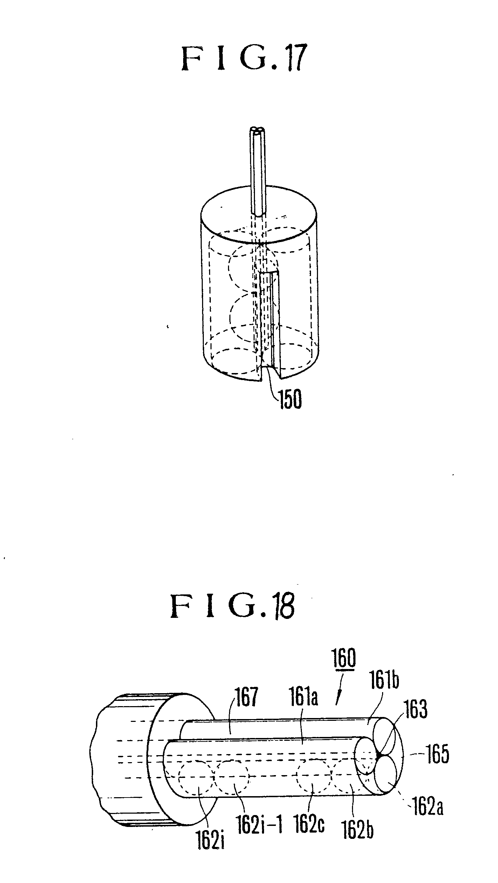

Fig. 16 shows another embodiment of this invention, in which a group of fibres is handled as a single optical fibre. For attaining the structure as shown in this figure, first, rods and balls 147a through 147c are arranged in the cylindrical space of a mould 148, and a group of fibres 146 is inserted into the tricuspid interstice formed by rods and balls in tangential contact with one another. At this time, the outer face of said group of fibres comes to be in tangential contact with said balls and rods as well. Then, a melting plastic resin is poured to contain said fibres, rods, and balls in lump. The optical fibres used here have an accurate diameter, so that when they are bounded, their cross section becomes of almost complete axial symmetry. Thus, a multifibre plug 145 is attained with accurate fibre location.

When plugs as shown in Figs. 10 through 13 have to be restricted with regard to their angular position about their axes, there is provided a key way 150 as shown in Fig. 17, which is formed by omitting a part of the side portion of the plug including a part of its end. The method of forming such will be understood from the description previously made in connection with the embodiments as shown in Figs. 8A and 8B.

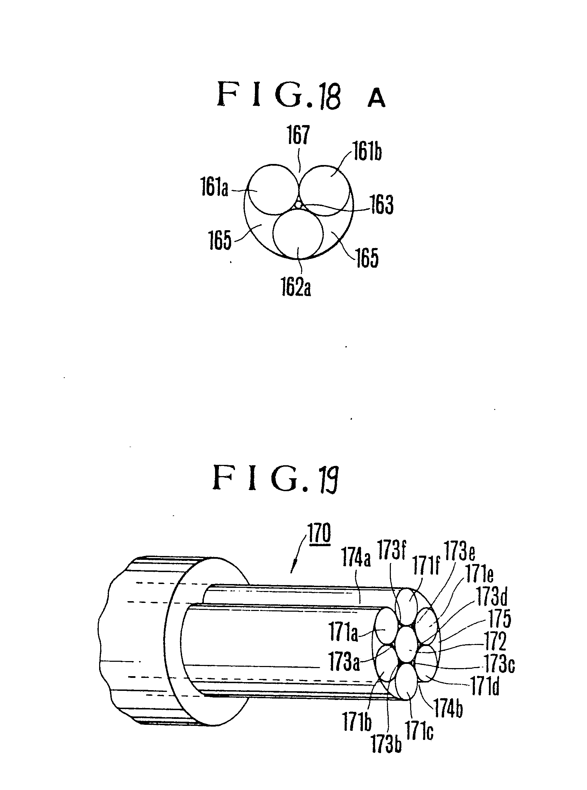

Figs. 18 through 24 show further modified embodiments of the present invention, which can provide accurate alignment against the connector and are provided with means for limiting their axial angular position.

Fig. 18 shows an embodiment with a single optical fibre, which is obtained by slight modification of the plug shown in Fig. 10. In order to produce a plug 160, first, rods 161a, 161b and balls 162a through 162i, all of which have an identical diameter, are arranged in the cylindrical space of the mould (not shown). Then, an optical fibre 163 is inserted into the interstice formed between said rods and balls. The fibre, rods and balls are in tangential contact with one another. After the above arrangement, a melting plastic is poured into said mould (not shown) to fix the entirety of the arrangement. When the plastic resin hardens, the moulded structure is removed from the mould and receives a predetermined process for finish. In this process, first, the end of the plug is polished until the rigid ball 162a becomes a half ball. The resultant structure becomes the same as obtained in Fig. 10. The second step is to remove only the plastic resin bridging the two rods 161a and 161b. The portion created by this step provides a key way 167 for limiting the plug angular position around its axis. Fig. 18A is a cross sectional view of the plug as shown in Fig. 18, from which the shape of the key way 167 will be more clearly understood. According to the structure above, the outer surface of the plug 160 is in tangential contact with said rods 161a, 161b as well as with balls 162a through 162i, so that the plug position in the connector sleeve is accurately determined by two rods and balls and at the same time the relative position between the fibre and key is also determined accurately. Further, the coincidence between the plug centre and the fibre centre is achieved with high accuracy. Such an excellent optical fibre location and alignment mechanism is due to the accurate process and stable nature of the basic materials such as rigid balls and rods which are made of steel, high quality hard glass, industrial ruby, sapphire, etc. For instance, the materials for use in manufacturing commercial bearings are processed with an error of less than 1 µm, so that the structure is obtained with accurate dimension when such precision basic materials are arranged closely. The plastic member 165 is used for just fixing rod and ball arrangement together, so that the dimensional requirement for it is not so severe. Generally, the plastic material shrinks when it hardens. Consequently, the outer surface of the plastic allows rods and balls to become partially exposed. Thus, the effective outer diameter of the plug comes to be determined by the arrangement of precision rods and balls. This is the same for the structure using only balls, but in the present embodiment, a combination of balls and rods is used to improve the strength of the resultant structure and also to make the plastic resin adequately generate throughout the structure.

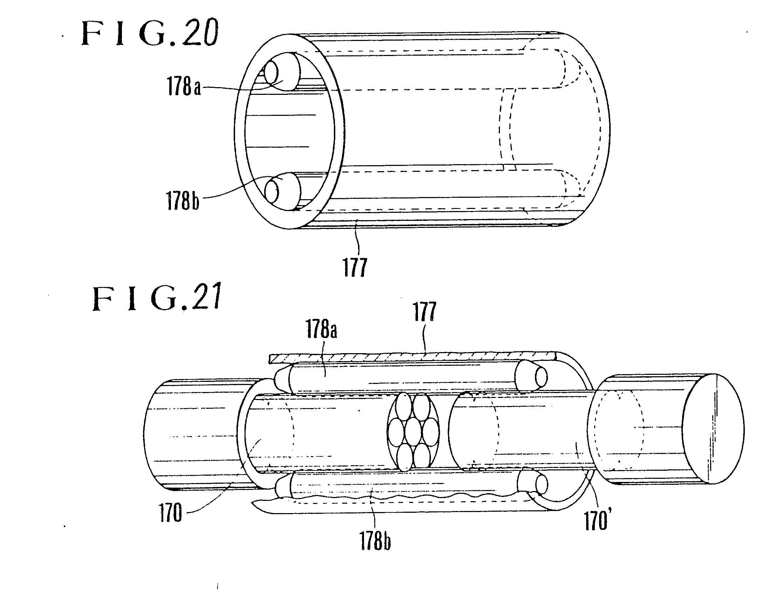

Fig. 19 shows still another embodiment of this invention. A plug 170 comprises six rods 171a through 171f in a hexagonal-packed arrangement, a ball line 172 in tangential contact with each of said rods, six optical fibres 173a through 173f which are inserted into six interstices formed by said six rods and one ball line, a plastic member 175, and two key ways 174a and 174b formed at opposite sides by removing the plastic member between rods 171a and 171f and between rods 171c and 171d. Rods and balls, as mentioned hereinbefore, are processed with an error of less than 1 µm, so that the relative position of six fibres, especially with regard to key ways 174a and 174b, is determined with high accuracy. Further, the rod and ball arrangement is maintained firmly and stably by the plastic member 175.

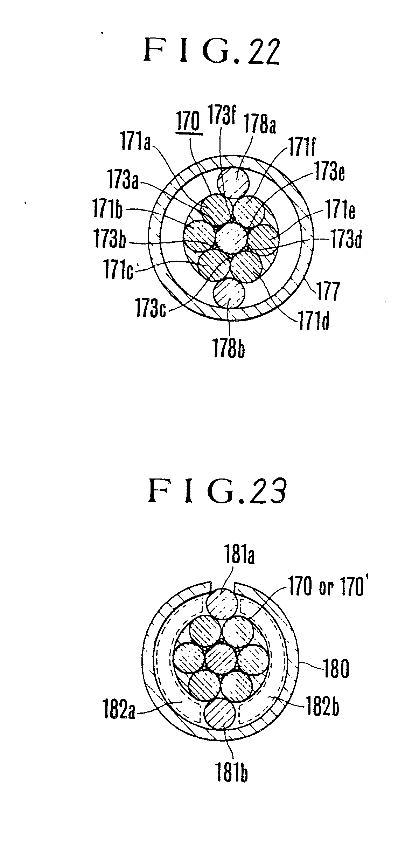

Fig. 20 shows a resilient connector sleeve 177 to receive the plug body as shown in Fig. 19. Said sleeve 177 having a circular or otherwise shaped cross section is provided with two guide pins 178a and 178b which are used for coupling with said key ways 174a and 174b. Fig. 21 shows the coupling state between said plug 170 (170') and said sleeve 177. Fig. 22 shows the cross section of the coupling state as shown in Fig. 21.

In the coupling as mentioned above, plugs 170, 170' are accurately aligned and at the same time, their axial angular positions are strictly set to each other, so that the six optical fibres contained in each plug are aligned with accuracy when coupled. In this case, the sleeve for receiving the plugs may be formed in a rigid body having precise dimension. However, it may be possible to use such a sleeve that is made of a resilient material with lower accuracy. In other words, it is possible to use such a sleeve that it elastically deforms itself in response to the insertion of the plug and holds the inserted plug by the spring action caused by its deformation. Such a sleeve is generally manufactured by an easy process at low cost, and also it allows the plugs to enter into it with less resistance. For this purpose, the sleeve 177 as shown in Fig. 22 may be made of a resilient thin metal. When the plug is inserted into the sleeve 177, the circle of the sleeve cross section is distorted by the force pushing guide pins 178a and 178b in the up and down direction. As a result, the sleeve comes to have an elliptic cross section, of which the vertical axis is a little longer than the horizontal. When the sleeve is deformed, a restoration force is created between said guide pins and that force grasps the inserted plugs firmly.

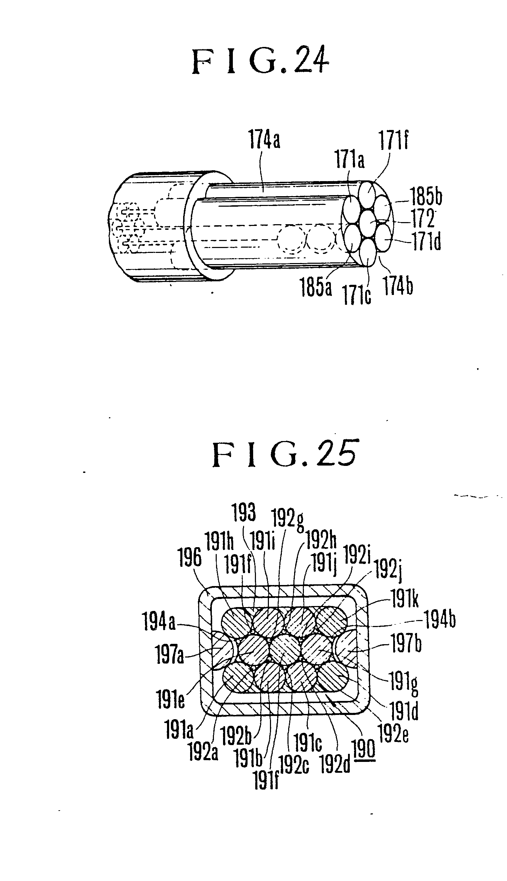

Another sleeve is shown in Fig. 23. The sleeve 180 is a slitted sleeve and is provided with guide pins or rods 181a and 181b at its inside surface. Spring action of the slitted sleeve can produce the same effect as in the sleeve as shown in Fig. 22. Further, as shown in Fig. 23, it may be possible to insert spacers 182a and 182b into the space between the plug and the slitted sleeve.

Fig. 24 shows another embodiment modified from the embodiment as shown in Fig. 19. Both embodiments are entirely the same except for the rigid members used therein. In other words, the rods 171b and 171e in Fig. 19 are replaced by rigid balls 185a and 185b in Fig. 22.

Fig. 25 shows still another embodiment of this invention, in which ten optical fibres are located. A plug 190 comprises cylindrical rigid rods and balls 191a through 191k which have an identical diameter and are stacked in three layers in 4—3—4 formation so as to form a rectangular cross section; ten optical fibres 192a through 192j each of which is inserted into the interstice formed by a respective triple set of rigid members; a plastic member 193 moulded to contain in lump said optical fibres, rigid rods and balls. Said rods and balls in every triple set are in tangential contact with one another as well as with the optical fibre running through the tricuspid interstice formed at the centre of the set. The outer surface of said plug 190 allows the rigid rods and/or balls 191a through 191d, 191e, 191g and 191h through 191k to be exposed tangentially on it. The key ways 194a and 194b are respectively formed at a space facing to rigid members 191a, 191e and 191h and also at another space facing to rigid members 191d, 191g and 191k. These key ways mate with guide pins 197a and 197b which are provided on the inside face of a rectangular sleeve 196 in the connector. With coupling by means of these key ways and pins, correct connection is achieved between the plug and the sleeve, thus resulting in an accurate multifibre plug alignment.

In connectors with plugs and sleeves as shown in Figs. 18 through 25, the plug angular position to the counter plug is determined in one way, so that an optical fibre alignment is easily and accurately achieved not only in single fibre plugs but also in multifibre plugs. Further, the mating and detaching of plugs are extremely easy, and a repetition of them causes no degeneration of the fibre connection quality. This has been confirmed by experiments on connectors manufactured for trial.

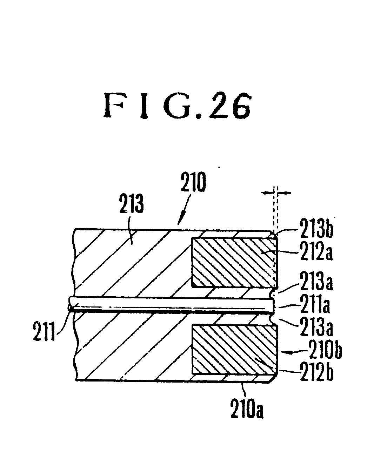

Fig. 26 shows an end structure of the plug which is applicable to all the embodiments having been described hereinbefore. A plug 210 comprises an optical fibre 211, two comparatively short rods 212a, 212b and ball 212c (only 212a, 212b shown) which are arranged around said fibre to be in tangential contact with it, and a plastic member 213 moulded to contain said fibre rods and ball in lump and to define the outer surface 210a of the plug. Said rods and ball are in tangential contact with said surface 210a, and are tangentially exposed on it. The end of the plug is finished by using a known polishing process said polishing process being of course necessarily continued until about half of ball 212c remains. As a result of this polishing process, the end 211a of the fibre 211 is more deeply polished than the ends of rods 212a, 212b and ball 212c by a few micrometers. The end surface (213a, 213b) of the plastic member is polished further than said fibre end. Consequently, the end of the plug is led by the hardest members, i.e. the rigid rods 212a, 212b and ball 212c, so that the fragile fibre faces come to oppose each other at a distance of several micrometers when two plugs are mated with each other, thus preventing fibre faces from being broken. In this case, the distance of several microns between fibres does not affect the fiber connection quality.

As will be apparent from the description above, in order to obtain the end structure as shown in Fig. 26, the material of the rigid members must be harder than at least the material for the optical fibre. Thus, the rigid members are to be prepared in this case by using such a material, for instance, industrial ruby, sapphire, or the like.

In the foregoing discussion, explanation has been made on the case that rods and balls have an identical diameter, but it should be noted that it is not an essential requirement of the invention that the rigid members have an identical diameter. Namely rigid members having different diameters may be used with the same effect if plugs to be mated have a symmetric arrangement of rigid members in the opposing cross sections.

## Claims

1. Optical fibre alignment mechanism including a plug, the front portion of which forms a plug body having an outer surface defining contact areas for engagement with sleeve or socket means receiving the plug body, an optical fibre arrangement including at least one optical fibre, and fibre alignment means comprising an arrangement of at least three rigid members of circular cross-section at least one of which is a rigid ball, which rigid members are disposed in said plug body to surround the optical fibres and each of which is in tangential contact with at least one of the optical fibres as well as with two other of said rigid members, characterized in that said plug is a moulded plug (13a) of a pourable and stiffening plastic resin forming a plastic member defining the general contour of the plug (13a) including the plug body (18), the outer surface of which plastic member substantially encloses in lump the fibre arrangement (20) and the rigid members but nevertheless allows a plurality of the rigid members to be exposed to a limited extent at least at three portions on the plug body (18), at least part of these limited exposed portions defining said contact areas of the plug body.

2. The mechanism according to claim 1, characterized in that all of the rigid members are rigid balls.

3. The mechanism according to claim 2, characterized in that the rigid balls (22) surrounding the optical fibre (20) are divided into a plurality of known per se triangular triple-ball sets (22a—22c, 22d—22f), which are stacked in parallel with a plane perpendicular to the axis of the fibre (20) in such a manner that one triple-ball set takes a position twisted by 60° against two other sets on both its sides, and that the balls (22) are exposed tangentially on the circumscribed surface (18d) of the plug body (18).

4. The mechanism according to claim 2, characterized in that the plastic member (49) contains in lump at least two known per se triangular triple-ball sets (46, 48), a part of each ball (46a—46c, 48a—48c) being exposed tangentially on the circumscribed surface (45b) of the plug body (45), the fibre (50) running through the interstice formed at the inside of the triple-ball sets (46, 48), and a ring spacer (47) being axially arranged to intervene between two of the triple-ball sets (46, 48).

5. The mechanism according to claim 1, characterized in that the rigid members are a combination of rigid balls and rigid rods.

6. The mechanism according to claim 5, characterized in that the rigid members consist of two rigid rods (111, 116, 161) being in tangential contact with each other and of adjoining rigid balls (112, 117, 162) which are lined to be in tangential contact with both of the rigid rods (111, 116, 161), the rigid rods (111, 116, 161) and rigid balls (112, 117, 162) being exposed on the circumscribed surface (110b) of the plug body (110).

7. The mechanism according to claim 5, characterized in that the rigid members consist of a rigid rod (121) and two rigid ball lines or balls (122a, 122b) being in tangential contact with each other as well as with the rigid rod (121), the balls (122a, 122b) and the rod (121) being exposed out of the outer surface of the plug body (120).

8. The mechanism according to claim 2 or claim 5, characterized in that the plastic member (73, 134, 193) contains in lump a plurality of optical fibres (72, 133, 192) and a plurality of rigid members (71, 132, 191) surrounding each of the fibres (72, 133, 192), the rigid members (71, 132, 191) being arranged in a plurality of axially extending layers and in tangential contact with neighbour members, each of the fibres (72, 133, 192) running through the interstice formed by adjoining three rigid members and being in tangential contact therewith and each rigid member belonging to the peripheral side layers of the rigid members in tangential contact with the outer surface of the plug body (70, 135, 190).

9. The mechanism according to claim 8, characterized in that the number of layers is two and all of the rigid members (71) are in tangential contact with the outer surface (70b) of the plug body (70) resp. the plastic member (73).

10. The mechanism according to claim 8, characterized in that the number of layers is three and only a part of the rigid members (132a—132d, 132h—132k; 191a—191d, 191h—191k) is in tangential contact with the outer surface of the plug body (135, 190) resp. the plastic member (134, 193).

11. The mechanism according to claim 2 or 5, characterized in that the plastic member (142, 175) contains in lump a plurality of optical fibres (141, 173) and a plurality of rigid members (139, 171—172) surrounding each of the fibres (141, 173), the rigid members (139, 171—172) being arranged such that one of the rigid members (139a, 172) is positioned at centre and the remaining members are annularly positioned around the centre rigid member (139a, 172), the centre rigid member being in tangential contact with all of the surrounding rigid members, each of which is also in tangential contact with rigid members on both its sides, each of the fibres being surrounded by the centre rigid member (139a, 172) and adjoining two of the annularly arranged rigid members, and each of the annularly arranged rigid members being in tangential contact with the outer surface of the plug body (138, 170).

12. The mechanism according to any one of claims 1 to 11, characterized in that the plug body resp. the plastic member has a circular, a triangular or a rectangular cross section.

13. The mechanism according to any one of claims 1 to 12, characterized in that the plastic member (64, 145) is provided at least at the end of its front portion with a key way (65, 150) prepared in the form of a groove to restrict the revolution about the mechanism axis, the shape of the key way (65, 150) being defined by exposed rigid members (61a, 61c; 147a, 147b).

14. The mechanism according to claim 13, characterized in that the plastic portion across two adjacent rods or balls (161a, 161b; 171a, 171f and 171c, 171d; 191a, 191h and 191d, 191k) is removed to form the key way (167; 174a, 174b; 194a, 194b).

15. The mechanism according to any one of claims 1 to 14, characterized in that a part of the rigid members is exposed at the frontal end face (18a) of the plug body (18) including the fibre end.

16. The mechanism according to claim 15, characterized in that the exposed part of the rigid members is polished.

17. The mechanism according to any one of claims 1 to 14, wherein the rigid members (212) are in contact with the frontal end face (210b) of the plug body (210) resp. of the plastic member (213), and are tangentially exposed on it, characterized in that the material of the rigid members (212) is harder than at least the material of the optical fibre (211) so that after a polishing process the optical fibre end (211a) is located at the inside a little offset from the rigid member surface exposed at the frontal end face (210b).

18. The mechanism according to any one of claims 1 to 17, characterized in that the optical fibre consists of a group of optical fibres (54, 62, 146), of which the external surface is in tangential contact with the rigid members.

19. The mechanism according to any one of claims 1 to 18, characterized in that the plastic member is made of epoxy resin.

20. The mechanism according to any one of claims 1 to 19, characterized in that the rigid members are made of a material that is selected from steel, glass, industrial ruby or sapphire.

21. A connector comprising two optical fibre alignment mechanisms as claimed in any one of claims 1 to 20, characterized by a receptacle (12) which comprises a resilient sleeve (12c) for receiving the two mechanisms (13, 14) from both of its ends respectively, a housing (12a) for containing the sleeve (12c), and means (12b) for determining the position of the sleeve (12c) in the housing (12a).

22. The connector according to claim 21, characterized in that the sleeve (12c) is provided with a slit (12 cs) formed in its axial direction.

23. The connector according to claim 21 or 22, characterized in that the moulded plug (13a) of the optical fibre alignment mechanisms (13, 14) further comprises a base (16) and a guide cylinder (17) which extend rearwardly from the plug body (18) of said moulded plug (13a), said optical fibre alignment mechanisms further comprising a spring (13c) for biasing the moulded plug (13a) in the connecting direction, and a housing (13b).

24. The connector according to claim 21, characterized in that the plug body (18) is provided with a key way (167, 174) for limiting its axial revolution while the sleeve (177) is provided on its inner wall with a guide pin (178) to mate with the key way (167, 174).

25. The connector according to claim 24, characterized in that there is provided a spacer (182a, 182b) intervening between the plug body (170) except for the guide pin portion (181a, 181b) and the inner wall of the sleeve (180).

## Patentansprüche

1. Ausrichteinrichtung für Lichtleitfasern umfassend einen Stecker, dessen vorderer Teil einen Steckerkörper mit einer Außenfläche bildet, die Berührungsbereiche zum Angriff an den Steckerkörper aufnehmenden Hülsen- oder Buchsenmitteln bestimmt, eine Lichtleitfaseranordnung, umfassend mindestens eine Lichtleitfaser, und Faserausrichtmittel, umfassend eine Anordnung von mindestens drei starren Teilen kreisförmigen Querschnitts, von denen mindestens eines eine starre Kugel ist, die in dem Steckerkörper die Lichtleitfasern umgebend angeordnet sind und von denen jedes in tangentialer Berührung mit mindestens einer der Lichtleitfasern sowie mit zwei weiteren der starren Teile steht, dadurch gekennzeichnet, daß der Stecker ein gegossener Stecker (13a) aus einem gießfähigen und härtbaren Kunstharz unter Bildung eines Plastikteiles ist, das den allgemeinen Umriß des Steckers (13a) einschließlich des Steckerkörpers (18) bestimmt und dessen Außenfläche im wesentlichen die Faseranordnung (20) und die starren Teile als Ganzes umschließt, aber dennoch eine Mehrzahl der starren Teile in begrenztem Maße an wenigstens drei Abschnitten des Steckerkörpers (18) freiliegen läßt, wobei mindestens ein Teil dieser begrenzten freiliegenden Abschnitte die Berührungsbereiche des Steckerkörpers bestimmt.

2. Einrichtung nach Anspruch 1, dadurch gekennzeichnet, daß alle starren Teile starre Kugeln sind.

3. Einrichtung nach Anspruch 2, dadurch gekennzeichnet, daß die die Lichtleitfaser (20) umgebenden starren Kugeln (22) in einer Mehrzahl für sich bekannter dreieckförmiger Drei-Kugel-Gruppen (22a—22c, 22d—22f) aufgeteilt sind, die parallel zu einer zur Achse der Faser (20) senkrechten Ebene derart aufeinander geschichtet sind, daß eine Drei-Kugel-Gruppe eine um 60° gegen zwei andere Gruppen an ihren beiden Seiten gedrehte Position einnimmt und daß die Kugeln (22) tangential an der umschriebenen Oberfläche (18b) des Steckerkörpers (18) freiliegen.

4. Einrichtung nach Anspruch 2, dadurch gekennzeichnet, daß das Plastikteil (49) als Ganzes mindestens zwei für sich bekannte dreieckförmiger Drei-Kugel-Gruppen (46, 48) enthält, wobei ein Teil jeder Kugel (46a—46c, 48a—48c) tangential an der umschriebenen Oberfläche (45b) des Steckerkörpers (45) freiliegt, die Faser (50) durch den an der Innenseite der Drei-Kugel-Gruppen (46, 48) gebildeten Zwischenraum verläuft und axial ein Ring-Abstandsstück (47) angeordnet ist, daß zwischen zwei der Drei-Kugel-Gruppen (46, 48) liegt.

5. Einrichtung nach Anspruch 1, dadurch gekennzeichnet, daß die starren Teile eine Kombination starrer Kugeln und starrer Stäbe (Stangen) sind.

6. Einrichtung nach Anspruch 5, dadurch gekennzeichnet, daß die starren Teile aus zwei starren Stäben (111, 116, 161), die sich in tangentialer Berührung miteinander befinden, und aus angrenzenden starren Kugeln (112, 117, 162) bestehen, die zur tangentialen Berührung mit beiden starren Stäben (111, 116, 161) ausgerichtet sind, wobei die starren Stäbe (111, 116, 161) und starren Kugeln (112, 117, 162) an der umschriebenen Oberfläche (110b) des Steckerkörpers (110) freiliegen.

7. Einrichtung nach Anspruch 5, dadurch gekennzeichnet, daß die starren Teile aus einem starren Stab (121) und zwei starren Kugelreihen oder Kugeln (122a, 122b) bestehen, die sich miteinander ebenso wie mit dem starren Stab (121) in tangentialer Berührung befinden, wobei die Kugeln (122a, 122b) und der Stab (121) aus der Außenfläche des Steckerkörpers (12) heraus freiliegen.

8. Einrichtung nach Anspruch 2 oder Anspruch 5, dadurch gekennzeichnet, das das Plastikteil (73, 134, 193) als Ganzes eine Mehrzahl Lichtleitfasern (72, 133, 192) und eine Mehrzahl jede der Fasern (72, 133, 192) umgebender starrer Teile (71, 132, 191) enthält, wobei die starren Teile (71, 132, 191) in einer Mehrzahl axial sich erstreckender Schichten und in tantentialer Berührung mit Nachbarteilen angeordnet sind, jede der Fasern (72, 133, 192) durch den durch aneinandergrenzende drei starre Teile gebildeten Zwischenraum verläuft und sich mit jenen in tangentialer Berührung befindet und jedes den peripheren Seitenschichten der starren Teile zugehörende starre Teil in tangentialer Berührung mit der Außenfläche des Steckerkörpers (70, 135, 190) steht.

9. Einrichtung nach Anspruch 8, dadurch gekennzeichnet, daß die Zahl der Schichten zwei beträgt und sich alle starren Teile (71) in tangentialer Berührung mit der Außenfläche (70b) des Steckerkörpers (70) bzw. des Plastikteils (73) befinden.

10. Einrichtung nach Anspruch 8, dadurch gekennzeichnet, daß die Zahl der Schichten drei ist und sich nur ein Teil der starren Teile (132a—132d, 132h—132k; 191a—191d, 191h—191k) in tangentialer Berührung mit der Außenfläche des Steckerkörpers (135, 190) bzw, des Plastikteils (134, 193) befindet.

11. Einrichtung nach Anspruch 2 oder 5, dadurch gekennzeichnet, daß das Plastikteil (142, 175) als Ganzes eine Mehrzahl Lichtleitfasern (141, 173) und eine Mehrzahl jede der Fasern (141, 173) umgebender starrer Teile (139, 171—172) enthält, wobei die starren Teile (139, 171—172) so angeordnet sind, daß eines der starren Teile (139a, 172) zentrisch positioniert ist und die übrigen Teile ringförmig um das zentrische starre Teil (139a, 172) angeordnet sind, das zentrische starre Teil sich in tangentialer Berührung mit allen umgebenden starren Teilen befindet, von denen jedes ebenfalls in tangentialer Berührung mit starren Teilen an beiden Seiten steht, jede der Fasern von dem zentrischen starren Teil (139a, 172) und angrenzenden zwei der ringförmigen angeordneten starren Teile umgeben ist und jedes der ringförmig angeordneten starren Teile sich in tangentialer Berührung mit der Außenfläche des Steckerkörpers (138, 170) befindet.

12. Einrichtung nach einem der Ansprüche 1 bis 11, dadurch gekennzeichnet, daß der Steckerkörper bzw. das Plastikteil einen kreisförmigen, dreieckförmigen oder rechteckigen Querschnitt hat.

13. Einrichtung nach einem der Ansprüche 1 bis 12, dadurch gekennzeichnet, daß das Plastikteil (64, 145) wenigstens am Ende seines vorderen Abschnittes mit einer Keilnut (65, 150) versehen ist, die in Form einer Rille hergestellt ist, um das Drehen um die Einrichtungsachse zu begrenzen, wobei die Form der Keilnut (65, 150) durch freiliegende starre Teile (61a, 61c; 147a, 147b) bestimmt ist.

14. Einrichtung nach Anspruch 13, dadurch gekennzeichnet, daß der Plastikabschnitt über zwei benachbarte Stäbe oder Kugeln (161a, 161b; 171a, 171f und 171c, 171d; 191a, 191h und 191d, 191k) zur Bildung der Keilnut (167; 174a, 174b; 194a, 194b) entfernt ist.

15. Einrichtung nach einem der Ansprüche 1 bis 14, dadurch gekennzeichnet, daß ein Teil der starren Teile an der das Faserende enthaltenden vorderen Endfläche (18a) des Steckerkörpers (18) freiliegt.

16. Einrichtung nach Anspruch 15, dadurch gekennzeichnet, daß der freiliegende Teil der starren Teile poliert ist.

17. Einrichtung nach einem der Ansprüche 1 bis 14, wobei die starren Teile (212) sich in Berührung mit der vorderen Endfläche (210b) des Steckerkörpers (210) bzw. des Plastikteils (213) befinden und darauf tangential freiliegen, dadurch gekennzeichnet, daß das Material der starren Teile (212) härter als mindestens das Material der Lichtleitfaser (211) ist, so daß nach einem Poliervorgang das Lichtleitfaserende (211a) an der Innenseite ein wenig abgesetzt von der an der vorderen Endfläche (210b) freiliegenden Oberfläche des starren Teils ist.

18. Einrichtung nach einem der Ansprüche 1 bis 17, dadurch gekennzeichnet, daß die Lichtleitfaser aus einer Gruppe Lichtleitfasern (54, 62, 146) besteht, deren äußere Oberfläche sich in tangentialer Berührung mit den starren Teilen befindet.

19. Einrichtung nach einem der Ansprüche 1 bis 18, dadurch gekennzeichnet, daß das Plastikteil aus Epoxydharz hergestellt ist.

20. Einrichtung nach einem der Ansprüche 1 bis 19, dadurch gekennzeichnet, daß die starren Teile aus einem Material hergestellt sind, das aus (der Materialgruppe) Stahl, Glas, Industrierubin oder Saphir ausgewählt ist.

21. Verbinder umfassend zwei Ausrichteinrichtungen für Lichtfasern gemäß einem der Ansprüche 1 bis 20, gekennzeichnet durch eine Aufnahme (12), die eine elastische Hülse (12c) zur Aufnahme der zwei Einrichtungen (13, 14) von jeweils ihren beiden Enden her, ein Gehäuse (12a) zur Aufnahme der Hülse (12c) und Mittel (12b) zur Bestimmung der Lage der Hülse (12c) in dem Gehäuse (12a) umfaßt.

22. Verbinder nach Anspruch 21, dadurch gekennzeichnet, daß die Hülse (12c) mit einem Schlitz (12 cs) versehen ist, der in ihrer Axialrichtung ausgebildet ist.

23. Verbinder nach Anspruch 21 oder 22, dadurch gekennzeichnet, daß der gegossene Stecker (13a) der Lichtleitfaser-Ausrichteinrichtungen (13, 14) weiter eine Basis (16) und einem Führungszylinder (17) umfaßt, die sich von dem Steckerkörper (18) des gegossenen Steckers (13a) nach hinten erstrecken, wobei die Lichtleitfaser-Ausrichteinrichtungen weiter eine Feder (13c) zur Beaufschlagung des gegossenen Steckers (13a) in der Verbindungsrichtung und ein Gehäuse (13b) umfassen.

24. Verbinder nach Anspruch 21, dadurch gekennzeichnet, daß der Steckerkörper (18) mit einer Keilnut (167, 174) zur Begrenzung seiner Axialdrehung versehen ist, während die Hülse (177) an ihrer Innenwandung mit einem mit der Keilnut (167, 174) zusammenwirkenden Führungszapfen (178) versehen ist.

25. Verbinder nach Anspruch 24, dadurch gekennzeichnet, daß ein Abstandsteil (182a, 182b) vorgesehen ist, das sich zwischen dem Steckerkörper (170), ausgenommen den Führungszapfenabschnitt (181a, 181b), und der Innenwand der Hülse (180) befindet.

**Revendications**

1. Dispositif d'alignement d'une fibre optique comprenant un capuchon dont la partie avant forme corps du capuchon ayant une surface extérieure définissant des aires de contact pour l'engagement de moyens formant gaine ou manchon recevant le corps du capuchon, un arrangement de fibres optiques comprenant au moins une fibre optique, et des moyens d'alignement de la fibre comportant un arrangement d'au moins trois éléments rigides à section circulaire, l'un au moins d'entre-eux étant constitué par une bille rigide, lesquels éléments rigides sont disposés dans ledit corps du capuchon pour entourer les fibres optiques, chacun d'entre eux étant en contact tangentiel tant avec l'une au moins des fibres optiques qu'avec les deux autres éléments rigides, le dispositif étant caractérisé en ce que ledit capuchon est un capuchon moulé (13a) réalisé dans une résine en matière plastique de renforcement apte à être coulée et formant un élément plastique qui définit le contour général du capuchon (13a) comprenant le corps du capuchon (18) la surface extérieure dudit élément plastique renfermant solidement, en bloc, l'arrangement de fibres (20) et les éléments rigides, mais permettant néanmoins auxdits éléments rigides d'être exposés sur une étendue limitée au moins à trois tranches du corps du capuchon (18), au moins une partie de ces tranches exposées d'étendue limitée définissant lesdites aires de contact du corps du capuchon.

2. Dispositif selon la revendication 1, caractérisé en ce que tous lesdits éléments rigides sont constitués par des billes rigides.

3. Dispositif selon la revendication 2, caractérisé en ce que les billes rigides (22) entourant la fibre optique (20) sont divisées en plusieurs jexu de trois billes formés en triangle (22a—22c, 22d—22f), en soi connu, lesquels sont empilées parallèlement à un plan perpendiculaire à l'axe de la fibre (20), de telle façon qu'un jeu de trois bille occupe une position tournée de 60° par rapport aux deux autres jeux, et ce de tout côté, les billes (22) étant, en outre, exposées tangentiellement sur la surface circonscrite (18b) du corps du capuchon (18).

4. Dispositif selon la revendication 2, caractérisé en ce que l'élément plastique (49) contient, en bloc, au moins deux jeux de trois billes disposées en triangle (46, 48), comme connu en soi, une partie de chaque bille (46a, 46c, 48a, 48c) étant tangentiellement exposée sur la surface circonscrite (45b) du corps du capuchon (45), la fibre (50) s'étendant à travers l'interstice formé ver l'intérieur des jex de trois billes (46, 48) et une bague d'espacement (47) étant disposée axialement pour s'interposer entre deux des jeux de trois billes (46, 48).

5. Dispositif selon la revendication 1, caractérisé en ce que les éléments rigides sont constitués par une combinaison de billes rigides et de barres rigides.

6. Dispositif selon la revendication 5, caractérisé en ce que les éléments rigides consistent en deux barres rigides (111, 116, 161) lesquelles barres rigides sont en contact tangentiel entre elles et avec les billes rigides voisines (112, 117, 162) qui sont alignées pour être en contact tangentiel avec les deux barres rigides (111, 116, 161), lesdites barres rigides (111, 116, 161) et lesdites billes rigides (112, 117, 162) étant exposées sur la surface circonscrite (110b) du corps du capuchon (110).

7. Dispositif selon la revendication 5, caractérisé en ce que lesdits éléments rigides consistent en une barre rigide (121) et deux lignes de billes rigides, ou billes, (122a, 122b), lesquelles billes sont en contact tangentiel tant entre-elles qu'avec la barre rigide (121), les billes (122a, 122b) et la barre (121) étant exposées en dehors de la surface extérieure du corps du capuchon (120).

8. Dispositif selon la revendication 2 ou la revendication 5, caractérisé en ce que l'élément plastique (73, 134, 193) contient, en bloc, plusieurs fibres optiques (72, 133, 192) et plusieurs éléments rigides (71, 132, 191) entourant chacune lesdites fibres (72, 133, 192), lss éléments rigides (71, 132, 191) étant disposées en un certain nombre de couches s'étendant axialement et en contact tangentiel avec les éléments voisins, chacune des fibres (72, 133, 192) s'étendant à travers l'interstice formé par trois éléments rigides contigus et étant en contact tangentiel avec ceux-ci, chaque élément rigide appartenant, en outre, à des couches latérales périphériques des éléments rigides en contact tangentiel avec la surface extérieure du corps du capuchon (70, 135, 190).

9. Dispositif selon la revendication 8, caractérisé en ce que le nombre de couches est de deux, et tous les éléments rigides (71) sont en contact tangentiel avec la surface extérieure (70b) du corps de capuchon (70), respectivement l'élément plastique (73).

10. Dispositif selon la revendication 8, caractérisé en ce que le nombre de couches est de trois et seulement une partie des éléments rigides (132a—132d, 132h—132k, 191a—191d, 191h—191k) est en contact tangentiel avec la surface extérieure du corps du capuchon (135, 190), respectivement l'élément plastique (134, 193).

11. Dispositif selon la revendication 2 ou la revendication 5, caractérisé en ce que l'élément plastique (142, 175) contient, en bloc, plusieurs fibres optiques (141, 173) et plusieurs éléments rigides (139, 171—172) entourant chacune desdites fibres (141, 173), les éléments rigides (139, 171—172) étant disposés de telle façon que l'un des éléments rigides (139a, 172) est central, les autres éléments étant disposés annulairement autour de cet élément rigide central (139a, 172), ledit élément rigide central étant en contact tangentiel avec tous les éléments rigides qui l'entourent, chacun d'eux étant aussi, et de tout côté, en contact tangentiel avec lesdits éléments rigides, chacune des fibres étant entourée par l'élément rigide central (139a, 172) et étant contigu à ceux des éléments rigides disposés annulairement, chacun desdits éléments rigides disposés annulairement étant, en outre, en contact tangentiel avec la surface extérieure du corps du capuchon (138, 170).

12. Dispositif selon l'une quelconque des revendications précédentes, caractérisé en ce que le corps de capuchon, respectivement l'élément plastique, a une section circulaire, triangulaire ou rectangulaire.

13. Dispositif selon l'une quelconque des revendication précédentes, caractérisé en ce que l'élément plastique (64, 145) comporte au moins vers une extrémité de sa partie avant une cannelure (65, 100) formée par une rainure, de façon à limiter la rotation autour de l'axe du dispositif, la forme de la cannelure (65, 150) étant définie par les éléments rigides exposés (61a, 61c; 147a, 147b).

14. Dispositif selon la revendication 13, caractérisé en ce que la partie en matière plastique située de part et d'autre de deux barres ou billes adjacentes (161a, 161b; 171a, 171f et 171c, 171d; 191a, 191h et 191d, 191k) est enlevée pour former la cannelure (167; 174a, 174b; 194a, 194b).

15. Dispositif selon l'une quelconque des revendications précédentes, caractérisé en ce qu'une partie des éléments rigides est exposée vers la face d'extrémité frontale (18a) du corps du capuchon (18) comprenant l'extrémité de la fibre.

16. Dispositif selon la revendication 15, caractérisé en ce que la partie exposée des éléments rigides est polie.

17. Dispositif selon l'une quelconque des revendications 1 à 14, dans lequel les éléments rigides (212) sont en contact avec la face d'extrémité (210b) du corps de capuchon (210), respectivement de l'élément plastique (213), et sont exposés tangentiellement sur celui-ci; ledit dispositif étant caractérisé en ce que la matière dans laquelle sont réalisés les éléments rigides (212) est plus dure qu'au moins celle de la fibre optique (211), de façon qu'après le processus de polissage, l'extrémité de la fibre optique (211a) soit logée à l'intérieur d'un léger retrait formé dans la surface de l'élément rigide exposé vers la face d'extrémité frontale (210b).

18. Dispositif selon l'une quelconque des revendications précédentes, caractérisé en ce que la fibre optique consiste en un groupement de fibres optiques (54, 62, 146) dont la surface externe est en contact tangentiel avec les éléments rigides.

19. Dispositif selon l'une quelconque des revendications précédentes, caractérisé en ce que l'élément plastique est fabriqué en résine époxy.

20. Dispositif selon l'une quelconque des revendications précédentes, caractérisé en ce que les éléments rigides sont réalisés dans une matière sélectionnée à partir de l'acier, du verre, du rubis industriel ou du saphir.

21. Connecteur comprenant deux dispositifs d'alignement de fibres optiques, tel que revendiqué dans l'une quelconque des revendications 1 à 20, caractérisé par une fiche (12) qui comprend un manchon élastique (12c) pour recevoir deux dispositifs (13, 14) respectivement à chacune de ses extrémités, un logement (12a) pour contenir le manchon (12c), et des moyens (12b) pour définir la position du manchon (12c) dans le logement (12a).

22. Connecteur selon la revendication 21, caractérisé en ce que la manchon (12c) est pourvu d'une fente (12 cs) formée dans sa direction axiale.

23. Connecteur selon la revendication 21 ou la revendication 22, caractérisé en ce que le capuchon moulé (13a) du dispositif d'alignement des fibres optiques (13, 14) comprend, en outre, une base (16) et un cylindre de guidage (17) qui s'étendent vers l'arrière du corps du capuchon (18) dudit capuchon moulé (13a), ledit dispositif d'alignement de fibres optiques comprenant, en outre, un ressort (13c) pour solliciter le capuchon moulé (13a) dans la direction de connection, et un logement (13b).

24. Connecteur selon la revendication 21, caractérisé en ce que le corps du capuchon (18) est pourvu d'une cannelure (167, 174), de façon à limiter sa révolution axiale, tandis que la manchon (177) est pourvu, sur sa paroi interne, d'une clavette de guidage (178), de façon à l'assembler avec la cannelure (167, 174).

25. Connecteur selon la revendication 24, caractérisé en ce qu'il est pourvu d'un moyen d'espacement (182a, 182b) intermédiaire entre le corps du capuchon (170), à l'exception de la partie formant clavette de guidage (181a, 181b), et la paroi interne dudit manchon.

# FIG.1

# F I G.2A

# F I G.2B

# F I G.2c

# FIG.3A FIG.3B

# FIG.3C FIG.3D

# F I G.4

# F I G.5

# F I G.6

# F I G.7

# F I G.8A

# F I G.8B

# F I G. 9 A

# F I G. 9 B

# F I G. 10

# F I G.11A

115 118 119

116b

117e

117d

117c

117b

117a

116a

# F I G.11B

118

116b

116bb

117e
117ee

117d
117dd

117c
117cc

116aa

117b
117bb

117a
117aa

FIG.12

FIG.13

FIG.14

# F I G. 15

# F I G. 16

# F I G.17

150

# F I G.18

# F I G.18 A

# F I G.19

## F I G.20

178a

178b

177

## F I G.21

178a

177

170

178b

170'

# F I G.22

# F I G.23

# FIG.24

185b
172
171d

171f

171a

174a

174b

185a 171c

# FIG.25

193 192g 192h 192i 192j 191k 194b

196 191h 191f 191i 191j 197b 191g

194a 197a 191e 191a 191b 191c 192c 192d 192e

190

# FIG.26